# FASCICULE DE BREVET EUROPEEN

(11) **EP 2 856 543 B1**
(45) Date de publication et mention de la délivrance du brevet: **27.07.2016**
(21) Numéro de dépôt: 13728485.7
(22) Date de dépôt: 24.05.2013
(51) Int. Cl.: H01M 4/136, H01M 4/1397, H01M 4/36, H01M 4/38, H01M 10/052, H01M 4/04

(54) **PROCÉDÉ DE FABRICATION D'UNE ÉLECTRODE, ÉLECTRODE CORRESPONDANTE ET BATTERIE COMPRENANT UNE TELLE ÉLECTRODE**
VERFAHREN ZUR HERSTELLUNG EINER ELEKTRODE, ENTSPRECHENDE ELEKTRODE UND BATTERIE MIT DERARTIGER ELEKTRODE
METHOD OF MANUFACTURING AN ELECTRODE, CORRESPONDING ELECTRODE AND BATTERY COMPRISING SUCH AN ELECTRODE

(30) Priorité: 25.05.2012 FR 1254867
(43) Date de publication de la demande: 08.04.2015
(73) Titulaire: Renault S.A.S., 92100 Boulogne-Billancourt (FR)
(72) Inventeur: GOHIER, Aurélien, 92160 Antony (FR)
(86) Numéro de dépôt international: PCT/FR2013/051149
(87) Numéro de publication internationale: WO 2013/175143

(56) Documents cités:
- WO-A2-2005/085130
- WO-A2-2011/149958
- US-A1- 2011 262 807

## Description

La présente invention concerne les dispositifs de stockage d'énergie ou batteries, et plus particulièrement les électrodes de batteries.

Grâce à leur densité d'énergie élevée, les batteries lithium-ion se sont largement imposées dans le domaine des batteries et permettent notamment d'envisager le développement des véhicules électriques présentant une autonomie supérieure à 200 km.

La densité d'énergie d'une batterie dépend de deux grandeurs : d'une part la différence de potentiel électrochimique (force électromotrice) entre les électrodes positive (cathode) et négative (anode) et d'autre part la capacité, à savoir le nombre de charges (mA·h) susceptibles d'être stockées dans chacune des électrodes. Actuellement, la densité d'énergie des batteries lithium-ion commerciales est fortement limitée par la capacité de l'électrode positive. Celle-ci est typiquement inférieure à 160 mAh/g, ce qui est environ deux fois plus faible comparée à la capacité de l'électrode négative. Par conséquent, le poids du matériau de l'électrode positive dans une batterie lithium-ion est au moins deux fois plus élevé que celui du matériau de l'électrode négative.

Parmi les matériaux de l'électrode positive, c'est le soufre qui présente la plus grande capacité spécifique : 1673 mAh/g. Cette valeur, dix fois supérieure à celles des matériaux utilisés actuellement, permet d'envisager un très fort accroissement de la densité d'énergie des batteries : de 150-200 Wh/kg à 400-500 Wh/kg, malgré le potentiel électrochimique relativement faible d'une électrode au soufre. Cependant, l'emploi du soufre comme matériau d'électrode pose deux problèmes principaux :
1) le soufre forme avec le lithium des espèces solubles : lors de la décharge, le lithium réagit avec le soufre et forme des espèces intermédiaires du type LiₓS_{y} qui sont solubles dans l'électrolyte. La solubilisation de ces espèces conduit à une perte irréversible de la capacité de l'électrode et donc de la densité d'énergie au cours des cycles de charge/décharge ;
2) le soufre est un isolant électrique : cette propriété limite fortement les possibilités des batteries au soufre en termes de puissance électrique.

Il est possible de limiter la dissolution du soufre dans l'électrolyte en emprisonnant le soufre dans les pores de matériaux carbonés. Une telle structure permet de maintenir une capacité d'électrode élevée (700 mAh/g) pendant 150 cycles. Cependant, le soufre n'y est que partiellement piégé car il subsiste toujours une interface directe avec l'électrolyte.

Pour s'affranchir de la mauvaise conductivité électrique du soufre, il est possible de déposer celui-ci sur un collecteur nanostructuré constitué de nanotubes de carbone alignés. Une telle disposition permet d'une part de limiter les longueurs de diffusion des électrons (qui se déplacent lors des charges/décharges) grâce aux dimensions nanométriques du soufre présent à la surface des nanotubes de carbone alignés. Par ailleurs, les nanotubes de carbone sont de bons conducteurs électriques, ce qui permet d'assurer une conductivité électrique élevée entre le soufre et le collecteur situé à la base des nanotubes de carbone.

Des exemples de nanotubes de carbone alignés utilisés comme support du soufre sont décrits dans les documents US 2011/0262807 et US 20011/0091773. Cependant, pour ces deux demandes de brevet, les nanotubes de carbone obtenus sont synthétisés par dépôt chimique en phase vapeur assisté par plasma (PECVD), ce qui conduit à des limitations sur les caractéristiques des nanotubes synthétisés. Plus particulièrement, les nanotubes de carbone présentent une densité relativement faible due à leur diamètre relativement grand (typiquement supérieur à 20 nm), ce qui augmente la quantité, et donc l'épaisseur, du soufre par unité de surface pour pouvoir augmenter la capacité de l'électrode, et donc conduit à une réduction de la conduction électrique de l'électrode. De plus, les nanotubes de carbone réalisés par PECVD présentent de manière générale une mauvaise qualité cristalline, ce qui leur confère également une conductivité électrique plus faible. Enfin, les méthodes de PECVD ne permettent pas de produire des nanotubes de carbone auto-orientés d'une longueur supérieure à 20 µm, ce qui implique des limitations en terme de capacité surfacique de l'électrode (charge stockée par unité de surface : mAh/cm²).

La présente invention a pour objet de résoudre les problèmes techniques énoncés précédemment. En particulier, l'invention a pour but de proposer une méthode de préparation d'une électrode permettant d'obtenir une conductivité électrique élevée. L'invention a également pour but d'obtenir une électrode présentant une surface spécifique élevée. L'invention a pour but également d'obtenir une électrode présentant une durabilité importante, c'est-à-dire une électrode capable de présenter une capacité sensiblement constante après plusieurs cycles de charge-décharge.

Selon un aspect, il est proposé un procédé de fabrication d'une électrode au soufre pour un dispositif de stockage d'énergie, notamment pour une batterie lithium-ion, comprenant les étapes suivantes :
a) un dépôt de germes catalytiques de croissance, par exemple du fer, sur un support électriquement conducteur, par exemple en aluminium, par pulvérisation d'aérosol,
b) une croissance, par exemple par CVD (en anglais : *chemical vapor déposition*), de nanotubes de carbone orientés à partir du dépôt de germes catalytiques de croissance,
c) un dépôt de soufre sur les nanotubes de carbone orientés formés à l'étape b), par exemple par pulvérisation d'aérosol, et
d) un dépôt d'une couche de carbone, de préférence graphitique, sur le soufre, après l'étape c).

La pulvérisation d'aérosol, ou spray d'aérosol, est un procédé de dépôt d'un matériau par projection (ou pulvérisation) de fines gouttelettes (ou microgouttelettes) entrainées par un gaz porteur. Un tel procédé présente l'avantage d'être facilement industrialisable et peu couteux, et permet d'éviter l'utilisation de méthodes plus compliquées telles que la PVD (en anglais : *physical vapor déposition*), qui nécessite de faire un vide poussé.

Le dépôt de germes de croissance sur le support électriquement conducteur par le procédé de spray d'aérosol permet d'obtenir, lors de l'étape b), des nanotubes de carbone longs, orientés et de faible diamètre. On entend par nanotubes orientés, des nanotubes présentant un angle par rapport à la surface du support compris entre 80° et 100°, de préférence égal ou sensiblement égal à 90°. Chaque nanotube de carbone orienté peut être constitué d'un ou plusieurs cylindres concentriques. Les nanotubes de carbone orientés présentent une longueur supérieure à 20µm, de préférence supérieure à 50µm, et plus préférentiellement supérieure à 100µm. Ils présentent également un diamètre inférieur à 20nm, de préférence inférieur à 15nm, plus préférentiellement inférieur à 10nm, et encore plus préférentiellement inférieur à 5nm. Les nanotubes de carbone orientés peuvent être espacés de 10 à 100nm entre eux. Il est ainsi possible d'obtenir une densité élevée de nanotubes de carbone, ce qui conduit, avec la longueur élevée des nanotubes, à une forte densité surfacique. L'épaisseur de soufre déposée à la surface des nanotubes de carbone peut alors être réduite, ce qui diminue les contraintes dues à la faible conductivité électrique du soufre. Par ailleurs, la méthode de croissance des nanotubes (CVD) associée au dépôt de germes catalytiques de croissance sur le support électriquement conducteur permet d'obtenir des nanotubes de carbone bien cristallisés et donc présentant une conductivité électrique élevée. Plus particulièrement, l'étape b) de croissance des nanotubes peut comprendre un dépôt chimique en phase vapeur (CVD) avec un précurseur hydrocarboné dont l'hydrogène a été dissocié, par exemple par un filament chaud.

La couche de carbone graphitique en surface du soufre permet de retenir le soufre déposé sur la surface des nanotubes de carbone. Plus particulièrement, la couche de carbone graphitique permet d'empêcher que les espèces solubles LiₓS_{y} formées lors des cycles de charge/décharge soient irréversiblement perdues dans l'électrolyte. La couche de carbone graphitique permet ainsi de maintenir dans le temps la capacité de l'électrode.

Selon un mode de mise en oeuvre, le support électriquement conducteur est un substrat en aluminium.

Selon un autre mode de mise en oeuvre, préalablement à l'étape a), on dépose, par exemple par un dépôt physique en phase vapeur (PVD), une couche d'aluminium sur un substrat pour former le support électriquement conducteur.

Préférentiellement, entre l'étape c) et l'étape d), on réalise une étape de chauffage de l'électrode afin de faire fondre le soufre à la surface des nanotubes de carbone. Une telle étape permet d'obtenir une couche de soufre relativement homogène en épaisseur, sur toute la surface des nanotubes de carbone.

L'invention concerne également une électrode au soufre obtenue par la mise en oeuvre du procédé de fabrication défini précédemment, ainsi qu'un dispositif de stockage, notamment une batterie lithium-ion, comprenant une électrode au soufre telle que définie précédemment en tant que cathode.

L'invention concerne également, selon un autre aspect, une électrode au soufre pour un dispositif de stockage d'énergie, notamment pour batterie lithium-ion, comprenant un support électriquement conducteur, par exemple en aluminium, et des nanotubes de carbone orientés disposés à la surface du support électriquement conducteur et recouverts au moins en partie par du soufre, le soufre recouvrant les nanotubes de carbone présentant une surface libre recouverte par une couche de carbone, de préférence graphitique. Autrement dit, l'électrode comprend un support électriquement conducteur, des nanotubes de carbone orientés disposés sur la surface du support, et un revêtement soufré sur toute ou partie des nanotubes de carbone.

On entend par nanotubes orientés, des nanotubes présentant un angle par rapport à la surface du support compris entre 80° et 100°, de préférence égal ou sensiblement égal à 90°. Chaque nanotube de carbone orienté peut être constitué d'un ou plusieurs cylindres concentriques.

En particulier, les nanotubes de carbone orientés présentent une longueur supérieure à 20µm, de préférence supérieure à 50µm, et plus préférentiellement supérieure à 100µm.

Préférentiellement, les nanotubes de carbone orientés présentent un diamètre inférieur à 20nm, de préférence inférieur à 15nm, plus préférentiellement inférieur à 10nm, et encore plus préférentiellement inférieur à 5nm.

Les nanotubes de carbone orientés peuvent être espacés de 10 à 100nm entre eux.

Le support électriquement conducteur peut être constitué d'un substrat en aluminium ou peut comprendre un substrat en acier inoxydable recouvert par une couche d'aluminium.

L'invention concerne enfin une batterie, notamment lithium-ion, comprenant une électrode au soufre, en particulier une cathode, telle que décrite précédemment.

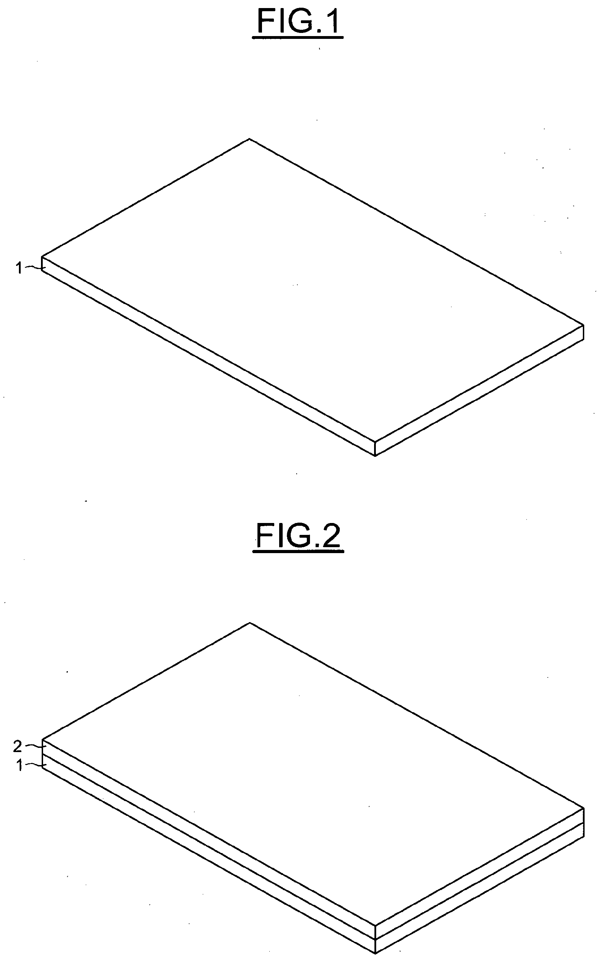

D'autres avantages et caractéristiques de l'invention apparaîtront à l'examen de la description détaillée d'un mode de mise en oeuvre, nullement limitatif, et des dessins annexés sur lesquels les figures 1 à 6 illustrent de manière schématique les principales étapes de fabrication d'une portion d'électrode selon l'invention. On notera que les éléments représentés sur les figures sont très largement agrandis afin de faciliter la compréhension.

Sur la figure 1 est représentée une vue en coupe d'un substrat 1 sur lequel vont être fabriqués des nanotubes de carbone/soufre pour former une portion d'électrode de batterie. Le substrat 1 peut comprendre ou être constitué d'une feuille métallique d'une épaisseur comprise entre 10µm et 50µm. Le substrat 1 peut être constitué d'une feuille d'aluminium, de cuivre, de nickel, d'acier inoxydable ou d'une feuille d'un autre matériau équivalent. Dans la suite de la description, on considère que le substrat 1 est en acier inoxydable.

La figure 2 représente une première étape du procédé de formation des nanotubes de carbone/soufre, dans le cas où le substrat 1 est en acier inoxydable. La première étape du procédé comprend alors le dépôt d'une couche 2 d'aluminium, sur la surface du substrat 1. L'aluminium de la couche mince 2 forme une couche barrière pour les espèces qui seront déposées dans les étapes suivantes du procédé, et permet également de stabiliser les germes catalytiques déposés plus tard. On notera que l'étape illustrée sur la figure 1 peut être supprimée lorsque le substrat est réalisé en aluminium.

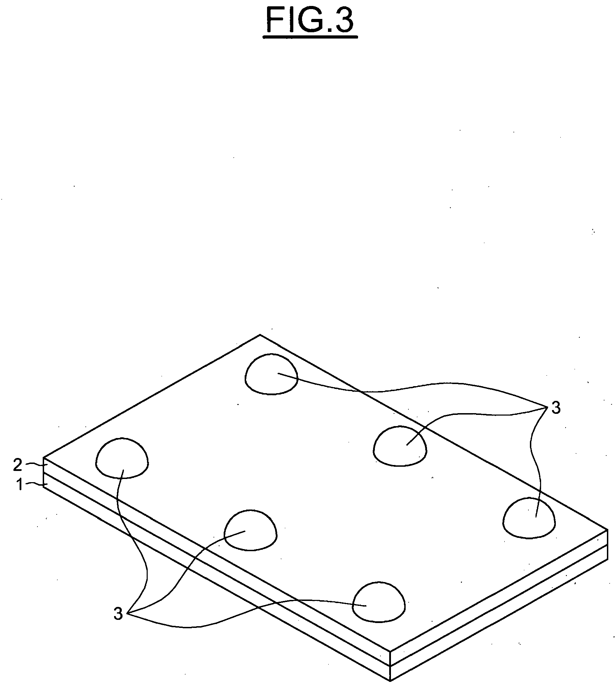

Dans une troisième étape représentée sur la figure 3, on dépose sur la surface de la couche 2 des germes catalytiques de croissance 3. Les germes catalytiques de croissance 3 peuvent comprendre du chlorure de fer, et permettent de catalyser la croissance des nanotubes de carbone orientés : plus particulièrement, les nanotubes de carbones vont croître à partir des germes catalytiques. Les germes catalytiques de croissance peuvent être déposés par spray d'aérosol. A cet effet, on peut utiliser une solution de chlorure de fer dans l'éthanol pulvérisée sous forme de gouttes micrométriques, puis entraînée par un flux d'azote vers la surface de la couche 2. Les microgouttes qui entrent alors en contact avec la surface de la couche 2, s'évaporent alors instantanément et conduisent au dépôt des germes catalytiques de croissance 3 sur la surface de la couche 2. Grâce à la couche 2 en aluminium, on obtient une meilleure stabilisation des germes catalytiques 3 de fer avant la croissance des nanotubes de carbone.

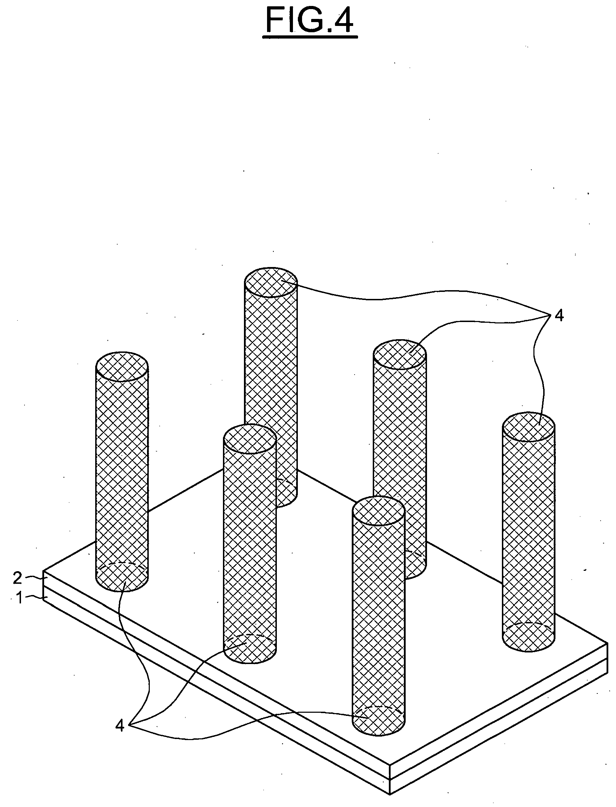

Dans une quatrième étape représentée sur la figure 4, on réalise la croissance de nanotubes de carbone 4 orientés sur la couche 2. La synthèse des nanotubes s'effectue par croissance à partir des germes catalytiques 3. Les nanotubes de carbones sont ainsi formés par dépôt chimique en phase vapeur (CVD) à l'aide d'un précurseur hydrocarboné. Afin de réaliser la synthèse des nanotubes de carbone 4 à des températures inférieures à 660°C (qui est la température de fusion de l'aluminium), l'hydrogène du précurseur hydrocarboné est dissocié en amont du support. La présence de la couche d'aluminium comme support permet une organisation du fer sous forme de nanoparticules pour la synthèse de nanotubes de carbone 4 orientés. Les nanotubes de carbone 4 alignés obtenus après synthèse présentent alors un diamètre d'environ 5 nm et une longueur supérieure à 20µm, par exemple entre 20µm et 200µm, ce qui conduit à une grande surface spécifique ainsi qu'une bonne conductivité électrique.

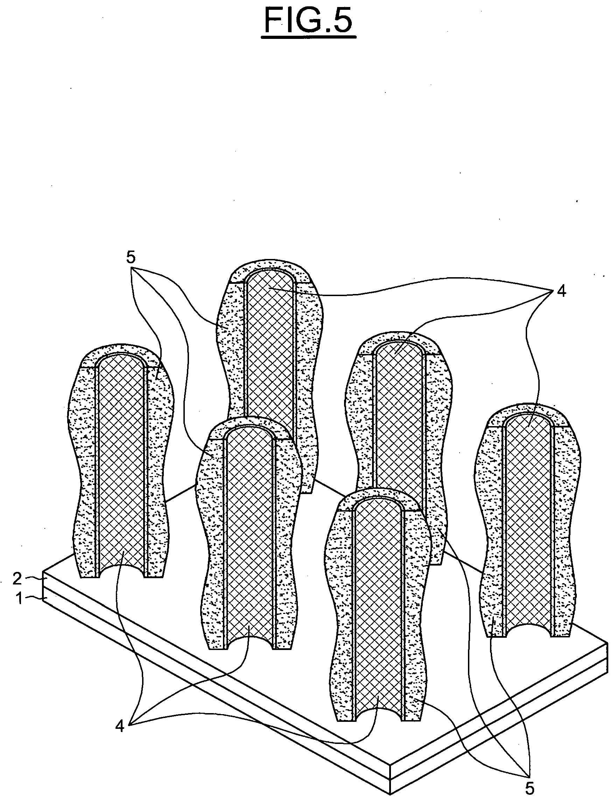

Puis, comme illustré sur la figure 5, on réalise un dépôt de soufre 5 sur les nanotubes de carbone 4. Sur la figure 5, les nanotubes de carbone 4 ont été représentés en coupe afin de mieux illustrer le dépôt de soufre 5 à leur surface. Avantageusement, ce dépôt de soufre 5 est effectué par spray d'aérosol d'une solution de soufre, de manière similaire au dépôt de la couche de chlorure de fer 3 sur la couche 2. Une fois le dépôt de soufre 5 effectué, on peut chauffer l'ensemble, par exemple à une température de 150°C, afin de faire fondre le soufre déposé et tapisser ainsi les parois des nanotubes de carbone 4.

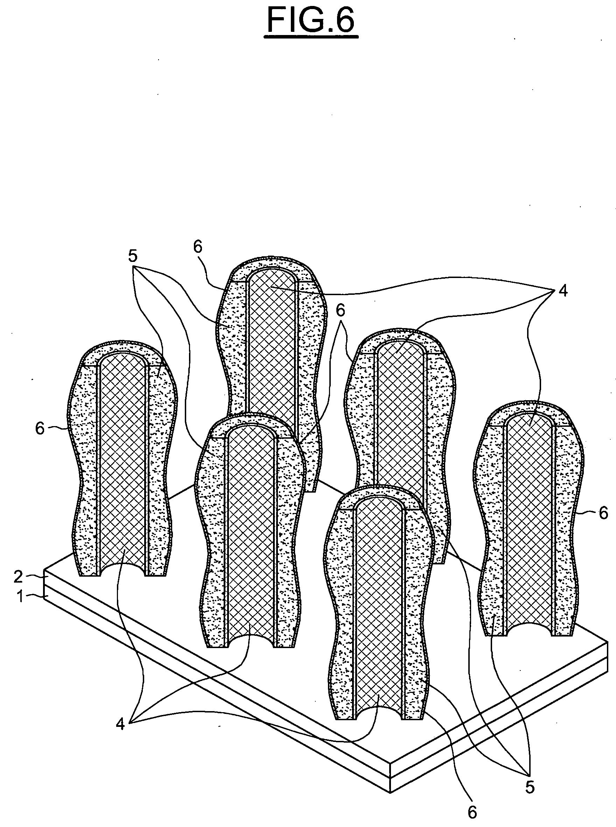

Enfin, comme illustré sur la figure 6 sur laquelle les nanotubes de carbone 4 sont également représentés en coupe, on dépose une couche de carbone graphitique 6 sur le soufre 5. Le dépôt est effectué à une température inférieure à 450°C qui correspond à la température d'ébullition du soufre, afin de conserver l'intégrité de la couche de soufre 5. Le carbone graphitique est déposé par exemple par dépôt en phase vapeur assisté par plasma (PECVD), sous une pression réduite de 2 mbar d'un gaz hydrocarboné, par exemple le méthane, l'acétylène ou plus avantageusement un mélange d'éthanol et d'isopropanol.

On obtient ainsi une portion d'électrode comprenant des nanotubes de carbone orientés recouverts de soufre et de graphite, et disposés sur un support en aluminium. Grâce à la longueur et à la densité des nanotubes de carbone, la couche de soufre déposée sur ceux-ci peut être de faible épaisseur, tout en conservant une grande quantité globale de soufre dans l'électrode : on obtient par conséquent une surface spécifique élevée. Une telle électrode permet donc d'obtenir les propriétés électriques voulues, notamment en termes de conductivité électrique et de densité, pour une application dans une batterie lithium-ion. La batterie lithium-ion peut ainsi comprendre une cathode telle que définie précédemment, et une anode qui sont reliées par un électrolyte.

### Exemple :

Un exemple de mise en oeuvre du procédé a été réalisé avec les paramètres suivants. Dans cet exemple, le support électriquement conducteur comprend un substrat en acier inoxydable 1 et une couche d'aluminium 2. La couche mince d'aluminium 2 présente une épaisseur de 30nm et est déposée sur le substrat 1, par dépôt physique en phase vapeur à l'aide d'un évaporateur.

Les germes catalytiques de croissance 3 sont déposés sur la couche d'aluminium 2. A cet effet, une solution de chlorure de fer est préparée par solubilisation de FeCl₃·6H₂O dans l'éthanol, à une concentration comprise entre 5.10⁻² mol.L⁻¹ et 5.10⁻⁴ mol.L⁻¹. La solution de chlorure de fer est alors pulvérisée sous forme de gouttes micrométriques à l'aide d'une valve de pulvérisation présentant un débit égal à 2mL.min⁻¹, puis est entraînée par un flux d'azote vers la surface de la couche d'aluminium 2 placée à une distance d'environ 11 cm et portée à une température de 120°C. La quantité de solution de chlorure de fer pulvérisée est de 30 mL pour une surface d'échantillon de 80 par 80mm².

La synthèse des nanotubes de carbone 4 est effectuée ensuite par dépôt chimique en phase vapeur (CVD) à 600°C à l'aide d'un mélange précurseur CH₄/H₂ (50:50). La pression dans le réacteur CVD est fixée à 50 mbar et le flux total des gaz à 100 sccm (en anglais : *standard cubic centimeters per minute*). Un filament chaud de tungstène présentant une puissance de 205 W, est utilisé pour dissocier, en amont, l'hydrogène et le méthane.

Le revêtement de soufre 5 est alors déposé sur les nanotubes de carbone 4. La solution de soufre utilisée pour le dépôt est une solution de soufre à 1% en poids dissout dans du toluène, et est pulvérisée par spray d'aérosol sur les nanotubes de carbone 4.

Enfin, le carbone graphitique est déposé par dépôt en phase vapeur assisté par plasma (PECVD) dans lequel le plasma est une décharge en courant continu avec une puissance de 100 W. Le dépôt est effectué à une température de 400°C, sous une pression réduite de 2 mbar d'un mélange d'éthanol et d'isopropanol.

On obtient ainsi une électrode présentant les propriétés électriques voulues, et adaptée à une utilisation dans une batterie lithium-ion.

## Revendications

1. Procédé de fabrication d'une électrode, notamment pour une batterie lithium-ion, comprenant les étapes suivantes :
a) un dépôt de germes catalytiques de croissance (3) sur un support électriquement conducteur par pulvérisation d'aérosol,
b) une croissance de nanotubes de carbone (4) orientés à partir du dépôt de germes catalytiques de croissance (3),
c) un dépôt de soufre (5) sur les nanotubes de carbone (4) orientés formés à l'étape b), et
d) un dépôt d'une couche de carbone (6) sur le soufre (5), après l'étape c).

2. Procédé selon la revendication 1 dans lequel le support électriquement conducteur est un substrat en aluminium.

3. Procédé selon la revendication 1 dans lequel, préalablement à l'étape a), on dépose une couche d'aluminium (2) sur un substrat (1) pour former le support électriquement conducteur.

4. Procédé selon l'une des revendications 1 à 3 dans lequel, entre l'étape c) et l'étape d), on réalise une étape de chauffage de l'électrode afin de faire fondre le soufre à la surface des nanotubes de carbone (4).

5. Electrode, notamment pour batterie lithium-ion, comprenant un support électriquement conducteur et des nanotubes de carbone (4) orientés disposés à la surface du support électriquement conducteur et recouverts au moins en partie par du soufre (5), **caractérisée en ce que** les nanotubes de carbone (4) orientés présentent une longueur supérieure à 20µm, de préférence supérieure à 50µm et **en ce que** le soufre (5) recouvrant les nanotubes de carbone (4) présente une surface libre recouverte par une couche de carbone (6).

6. Electrode selon la revendication 5 dans laquelle les nanotubes de carbone (4) orientés présentent un diamètre inférieur à 20nm, de préférence inférieur à 15nm.

7. Electrode selon l'une des revendications 5 ou 6 dans laquelle le support électriquement conducteur est constitué d'un substrat en aluminium ou comprend un substrat en acier inoxydable (1) recouvert par une couche d'aluminium (2).

8. Batterie, notamment lithium-ion, comprenant une électrode selon l'une des revendications 5 à 7.

## Patentansprüche

1. Verfahren zur Herstellung einer Elektrode, insbesondere für eine Lithiumionenbatterie, das folgende Schritte umfasst:
a) Abscheidung von katalytischen Wachstumskeimen (3) auf einem elektrisch leitenden Träger durch Aerosol-Spritzen,
b) Wachsenlassen von orientierten Kohlenstoffnanoröhren (4) ausgehend von der Abscheidung katalytischer Wachstumskeime (3),
c) Abscheidung von Schwefel (5) auf den in Schritt b) gebildeten Kohlenstoffnanoröhren (4) und
d) Abscheidung einer Kohlenstoffschicht (6) auf dem Schwefel (5) nach Schritt c).

2. Verfahren nach Anspruch 1, bei dem es sich bei dem elektrisch leitenden Träger um ein Aluminiumsubstrat handelt.

3. Verfahren nach Anspruch 1, bei dem man vor Schritt a) auf einem Substrat (1) eine Aluminiumschicht (2) abscheidet, um den elektrisch leitenden Träger zu bilden.

4. Verfahren nach einem der Ansprüche 1 bis 3, bei dem man zwischen Schritt c) und Schritt d) einen Schritt des Erhitzens der Elektrode zum Schmelzen des Schwefels auf der Oberfläche der Kohlenstoffnanoröhren (4) durchführt.

5. Elektrode, insbesondere für eine Lithiumionenbatterie, mit einem elektrisch leitenden Träger und orientierten Kohlenstoffnanoröhren (4), die auf der Oberfläche des elektrisch leitenden Trägers angeordnet und mindestens teilweise mit Schwefel (5) bedeckt sind, **dadurch gekennzeichnet, dass** die orientierten Kohlenstoffnanoröhren (4) eine Länge von mehr als 20 µm, vorzugsweise mehr als 50 µm, aufweisen und dass der die Kohlenstoffnanoröhren (4) bedeckende Schwefel (5) eine freie Oberfläche aufweist, die durch eine Kohlenstoffschicht (6) bedeckt ist.

6. Elektrode nach Anspruch 5, wobei die orientierten Kohlenstoffnanoröhren (4) einen Durchmesser von weniger als 20 nm, vorzugsweise weniger als 15 nm, aufweisen.

7. Elektrode nach Anspruch 5 oder 6, wobei der elektrisch leitende Träger aus einem Aluminiumsubstrat besteht oder ein Substrat aus nicht rostendem Stahl (1), das durch eine Aluminiumschicht (2) bedeckt ist, umfasst.

8. Batterie, insbesondere Lithiumionenbatterie, mit einer Elektrode nach einem der Ansprüche 5 bis 7.

## Claims

1. Method for fabricating an electrode, notably for a lithium-ion battery, comprising the following steps:
a) a deposition of catalytic growth seeds (3) onto an electrically-conducting substrate by aerosol spraying,
b) a growth of oriented carbon nanotubes (4) starting from the deposition of catalytic growth seeds (3),
c) a deposition of sulfur (5) onto the oriented carbon nanotubes (4) formed in the step b), and
d) a deposition of a layer of carbon (6) onto the sulfur (5), after the step c).

2. Method according to Claim 1 in which the electrically-conducting substrate is an aluminum substrate.

3. Method according to Claim 1 in which, prior to the step a), a layer of aluminum (2) is deposited onto a substrate (1) in order to form the electrically-conducting substrate.

4. Method according to one of Claims 1 to 3 in which, between the step c) and the step d), a step for heating the electrode is carried out in order to melt the sulfur on the surface of the carbon nanotubes (4).

5. Electrode, notably for a lithium-ion battery, comprising an electrically-conducting substrate and oriented carbon nanotubes (4) disposed on the surface of the electrically-conducting substrate and covered, at least in part, by sulfur (5), **characterized in that** the oriented carbon nanotubes (4) have a length greater than 20 µm, preferably greater than 50 µm and **in that** the sulfur (5) covering the carbon nanotubes (4) has a free surface area covered by a layer of carbon (6).

6. Electrode according to Claim 5 in which the oriented carbon nanotubes (4) have a diameter less than 20 nm, preferably less than 15 nm.

7. Electrode according to either of Claims 5 and 6 in which the electrically-conducting substrate consists of an aluminum substrate or comprises a substrate made of stainless steel (1) covered by a layer of aluminum (2).

8. Battery, notably lithium-ion, comprising an electrode according to one of Claims 5 to 7.
